# EUROPÄISCHE PATENTSCHRIFT

(11) **EP 2 154 011 B1**
(45) Veröffentlichungstag und Bekanntmachung des Hinweises auf die Patenterteilung: **26.09.2012**
(21) Anmeldenummer: 09166049.8
(22) Anmeldetag: 21.07.2009
(51) Int. Cl.: B60H 1/00

(54) **Land- oder Baumaschine mit einer Klimaanlage**
Agricultural or construction machine comprising an air-conditioning assembly
Engin ou machine agricole comprenant une climatisation

(30) Priorität: 29.07.2008 DE 102008035403
(43) Veröffentlichungstag der Anmeldung: 17.02.2010
(73) Patentinhaber: Behr Industry GmbH & Co. KG, 70469 Stuttgart (DE)
(72) Erfinder: Hipp-Kalthoff, Christoph, 75397 Simmozheim (DE); Voigt, Klaus, 74321 Bietigheim-Bissingen (DE)
(74) Vertreter: Jooß, Martin

(56) Entgegenhaltungen:
- EP-A- 0 438 076
- EP-A- 1 669 225
- US-A1- 2006 186 224

## Beschreibung

Die Erfindung betrifft eine Land- oder Baumaschine mit einer Klimaanlage mit Gebläsen.

Zur Temperierung von Luft in einem Fahrzeug ist üblicherweise eine Klimaanlage vorgesehen, welche ein Gebläse für die Frisch- und Umluftansaugung, einen Verdampfer und einen Heizer aufweist.

Bei vielen Klimaanlagen, insbesondere in den Kabinen von Land- oder Baumaschinen, ist neben einem Hauptgebläse ein zusätzliches Gebläse vorgesehen, das Frischluft zum Hauptgebläse fördert, um den häufig vorhandenen, hohen Druckabfall im Ansaugtrakt der Kabine auszugleichen. Eine derartige Klimaanlage ist beispielsweise im US-Patent 4,531,453 beschrieben. Über ein Fnschluftgebläse wird hierbei die Frischluft über eine Frischluftöffnung aus dem oberen hinteren Bereich einer Seite des Fahrzeugs angesaugt. Das Gebläse ist im hinteren Bereich des Fahrzeugs unter dem Fahrersitz angeordnet und fördert die Frischluft zu einem Vorreiniger und anschließend zu einem Filter. In einem Mischraum wird die Frischluft mit über eine Umluftöffnung, die im hinteren Bereich der Kabine angeordnet ist, und einen weiteren Filter angesaugte Umluft vermischt. Die Mischluft wird anschließend durch einen Verdampfer und bei Bedarf durch einen Heizer geleitet, bevor die Mischluft zum Hauptgebläse und auf der der Frischluftöffnung gegenüberliegend angeordneten Seite der Kabine angeordnete Ausströmöffnungen in die Kabine gelangt, d.h. das Hauptgebläse fördert diese Mischluft durch saugseitig angeordnete Wärmetauscher in die Kabine. Die Drehachsen der Gebläse sind hierbei versetzt und parallel zueinander angeordnet, wobei das Hauptgebläse etwas unterhalb und vor dem Frischluftgebläse auf der Seite der Austrittsöffnungen angeordnet ist. Der Verdampfer ist in Richtung der Fahrzeugmittlängsachse ausgerichtet, der Heizer schräg hierzu.

Das US-Patent 4,467,706 offenbart eine Baumaschine mit einem Außenluftgebläse, welches insbesondere dazu dient, den Luftdruck in der Kabine über dem Umgebungsdruck zu halten. Die Außenluft wird hierbei über Filter angesaugt und weitergeleitet. Ferner ist - unabhängig vom Außenluftgebläse - ein Umluftgebläse vorgesehen, welches Umluft aus der Kabine über Filter ansaugt, Hinter dem Gebläse wird die Umluft dem Außenluftstrom beigeführt und gelangt gemeinsam mit diesem direkt zu einem Verdampfer und Heizer bevor die temperierte Mischluft der Kabine zugeführt wird. Die beiden Gebläse sind in einem unteren Bereich der Baumaschine vor der Kabine angeordnet, wobei die Drehachsen der Gebläse parallel zueinander und senkrecht zur Fahrzeugrnittellängsebene verlaufen. Beim Umluftgebläse handelt es sich hierbei um ein Gebläse mit zwei Laufrädern und der Saugkanal wird von unten her dem Gebläse zugeführt. Das Frischluftgebläse ist etwas höher vor dem Umluftgebläse angeordnet, so dass der Frischluftkanal vom Frischluftgebläse ausgehend oberhalb des Umluftgebläses verlaufend angeordnet ist.

Die EP 0 438 076 A2 offenbart eine Landmaschine gemäß Oberbegriff des Anspruchs 1.

Diese bekannten Klimaanlagen lassen jedoch noch Wünsche offen.

Es ist Aufgabe der Erfindung, eine verbesserte Klimaanlage mit Gebläse, in einer Land- oder Baumaschine, zur Verfügung zu stehen.

Diese Aufgabe wird gelöst durch eine Land- oder Baumaschine mit den Merkmalen des Anspruches 1, Vorteilhafte Ausgestaltungen sind Gegenstand der Unteransprüche.

Eine derartige Anordnung ermöglicht eine sehr kompakte Ausgestaltung des Klimaanlagenbereichs. Insbesondere können - auf Grund der Positionierung der Gebläse vor den Wärmetauschern - kostengünstigere Gebläse verwendet werden, als wenn die Gebläse die Luft durch die Wärmetauscher saugern müssen.

Bevorzugt ist ein Zwischeniuftkanal zwischen dem ersten Gebläse und dem zweiten Gebläse vorgesehen, und das zweite Gebläse fördert als Hauptgebläse Frisch- und Umluft zum nachfolgend angeordneten Verdampfer. Durch die Hintereinanderschaltung der Gebläse, wobei zwischen dem ersten und zweiten Gebläse Umluft beigemischt wird, verbessert - insbesondere bei großen Temperaturunterschieden von Kabinentemperatur und Außentemperatur die Vermischung und sorgt für eine gleichmäßiger temperierte Luft, insbesondere am Verdampfer und/oder am Heizkörper, wodurch sich die Kälte- und/oder Heizleistung verbessert, sowie in weiterer Folge einer gleichmäßiger temperierten Luft in der Kabine.

Alternativ kann das erste Gebläse Frischluft und das zweite Gebläse Umluft direkt dem Verdampfer zuführen, d.h. zwei getrennte Gebläse und kein einzelnes Hauptgebläse sind für die Frischluft- und Umluftförderung zum Verdampfer vorgesehen. Dies ermöglicht eine unabhängige Regelung der beiden Gebläse, d.h. die Regelung kann vereinfacht werden.

Besonders bevorzugt führt ein Umluft-Ansaugluftkanal direkt benachbart ober- oder unterhalb des ersten Gebläses verlaufend von einer Seite des Fahrzeugirinenraums zum zweiten Gebläse, welches zumindest größtenteils auf der gegenüberliegenden Seite des Fahrzeugs angeordnet ist.

Die Drehachsen der Gebläsemotoren sind vorzugsweise in einem Winkel Winkel von 30°-105°, insbesondere kleinergleich einem rechten Winkel, zueinander angeordnet. Hierbei ist insbesondere ein Winkel kleiner 90° vorteilhaft, da in diesem Fall das erste Gebläse nicht nur in die näher angeordnete Ansaugöffnung des zweiten Gebläses, sondern auch Frischluft zur weiter entfernten Ansaugöffnung bläst.

Die Drehachse des Gebläsemotors des ersten Gebläses kann bevorzugt in einer Ebene liegen, die von zwei sich schneidenden Geraden aufgespannt wird, wobei die erste Gerade zur Fahrtrichtung in einem Winkel innerhalb eines Bereichs zwischen +20° und -20° verläuft und die zweite Gerade, in einem Winkel innerhalb eines Bereichs zwischen +20° und ∼20° zum Kabinenboden angeordnet ist, Besonders bevorzugt ist die Drehachse des Gebläsemotors des ersten Gebläses in einem Winkel von maximal 25°, insbesondere maximal 10°, zur Fahrzeuglängsrichtung geneigt angeordnet. Für einen günstigen Strömungsverlauf der Luft ist bevorzugt die Drehachse des ersten Gebläses nach außen in Richtung der näherliegenden Seitenwand der Maschine geneigt, für eine verbesserte Fnschluftverteilung ist sie dagegen nach innen in Richtung der beabstandeteren Seitenwand der Maschine geneigt.

Bevorzugt ist die Drehachse des Gebläsemotors des zweiten Gebläses in einem Winkel von maximal 25°, insbesondere maximal 10°, zur Fahrzeugbreitenrichtung geneigt angeordnet.

Das zweite Gebläse weist vorzugsweise zwei Laufräder mit dazwischen angeordnetem Gebläsemotor auf, während das erste Gebläse bevorzugt nur ein Laufrad aufweist.

Besonders bevorzugt ist das erste Gebläse in Bezug auf die Fahrzeugmittellängsachse vollständig auf einer Seite des Fahrzeugs angeordnet, wähnend das zweite Gebläse größtenteils auf der anderen Seite des Fahrzeugs angeordnet ist.

Im Folgenden wird die Erfindung anhand zweier Ausführungsbeispiele mit Varianten, teilweise unter Bezugnahme auf die Zeichnung, im Einzelnen erläutert. Es zeigen:
- Fig. 1: eine schematische Draufsicht auf eine Klimaanlage einer Baumaschine gemäß dem ersten Ausführungsbeispiel,
- Fig. 2: einen Längsschnitt durch die Klimaanlage von Fig. 1,
- Fig. 3: einen Schnitt quer durch die Klimaanlage von Fig. 1,
- Fig. 4: eine perspektivische Ansicht der teilweise in einem Gehäuse angeordneten Klimaanlage von Fig. 1, und
- Fig. 5: eine schematische Draufsicht auf eine Klimaanlage einer Baumaschine gemäß dem zweiten Ausführungsbeispiel.

Gemäß dem ersten Ausführungsbeispiel ist eine Gebläseanordnung 1 für eine Klimaanlage 2 eines Baufahrzeugs vorgesehen, wobei die Klimaanlage 2 einen Verdampfer 3 und einen Helzer 4 aufweist. Ferner weist ist der Klimaan!age 2 ein erstes Gebläse 5 für die Fnschluftansaugung mit einem von einer Frischluftöffnung 6 ausgehenden Frischluft-Ansaugluftkanal zugeordnet. Die Frischluftöffnung 6 ist vorliegend hinter dem Fahrersitz, leicht seitlich bezüglich der Mittellängsachse des Fahrzeugs angeordnet. Teil der Gebläseanordnung 1 und damit auch der Klimaanlage 2 zugeordnet ist ein zweites Gebläse 7 für die Gesamtluftansaugung von Frischluft sowie Umluft, weshalb auf dieses zweite Gebläse auch als Hauptgebläse Bezug genommen wird. Die Umluft wird hierbei über zwei von rechts und links des Fahrersitzes (nicht dargestellt) angeordneten Umluftöffnungen 8 ausgehende Umluft-Ansaugluftkanäle direkt vom Hauptgebläse angesaugt.

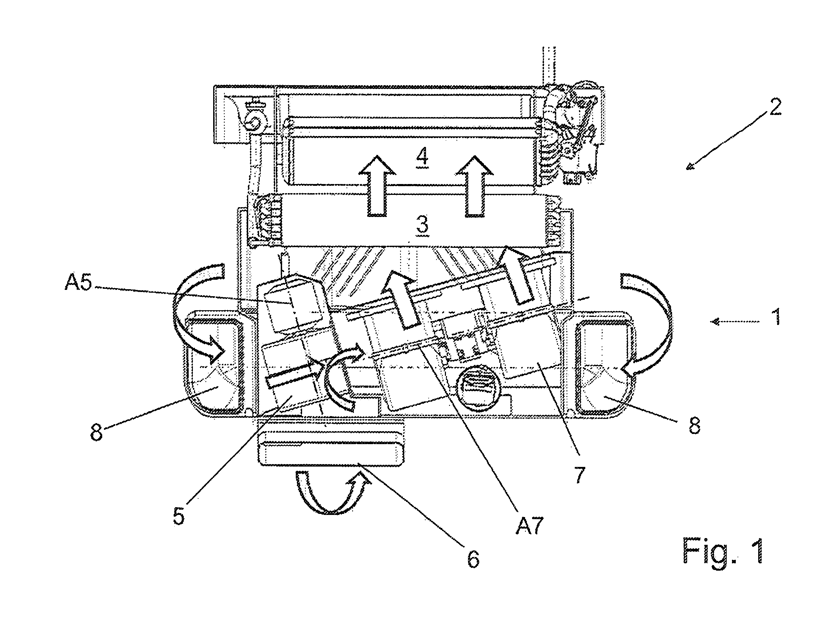

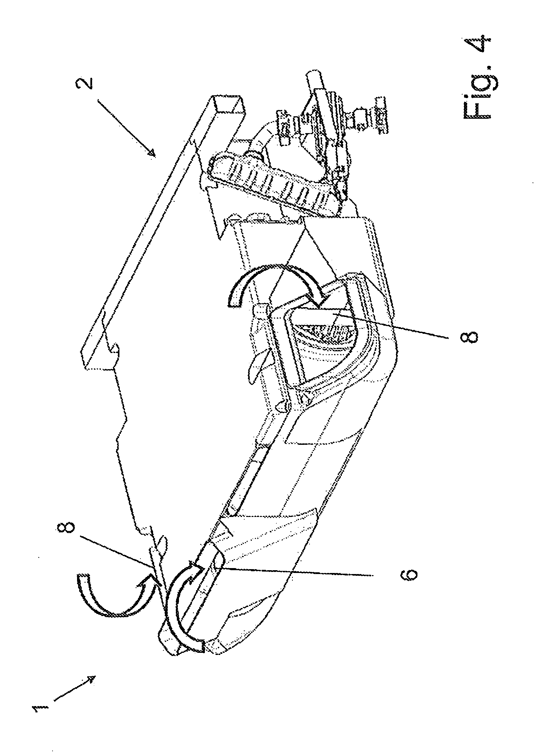

Wie aus Fig. 1 ersichtlich, sind die beiden Gebläse 5 und 7 im Wesentlichen nebeneinander in einer Höhe in Längsrichtung des Fahrzeugs gesehen angeordnet, wobei vorliegend das erste Gebläse 5 links der Mittellängsachse des Fahrzeugs und das zweite Gebläse 7, weiches größer als das erste Gebläse 5 ausgebildet ist, rechts neben der Mittellängsachse des Fahrzeugs angeordnet ist. Die Drehachsen der einzelnen Gebläselaufräder sind jedoch um 90° gedreht zueinander, wobei vorliegend die Drehachse A5 des ersten Gebläses 5 nahezu (die Abweichung beträgt ca. 15°) in Fahrtrichtung weist, die Drehachse A7 des mit zwei Laufrädern ausgebildeten zweiten Gebläses 7 jedoch nahezu (die Abweichung beträgt ca. 15°) in Breitenrichtung des Fahrzeugs weist (siehe Fig. 1). Die beiden Gebläse 5 und 7 sind jeweils in Gebläseaufnahmen angeordnet, welche im Luftführungsgehäuse der Klimaanlage ausgebildet sind. Dabei können auch Teile des Luftführungsgehäuses Bereiche der Gebläsegehäuse bilden. Im Luftführungsgehäuse sind ferner Aufnahmen für den Verdampfer 3 und den Heizer 4 ausgebildet. Insgesamt ergibt sich, wie aus Fig. 4 ersichtlich, eine kompakte, vorliegend nahezu flach quaderförmige Ausgestaltung der gesamten Anordnung einschießlich der Ansaugluftkanäle ergibt.

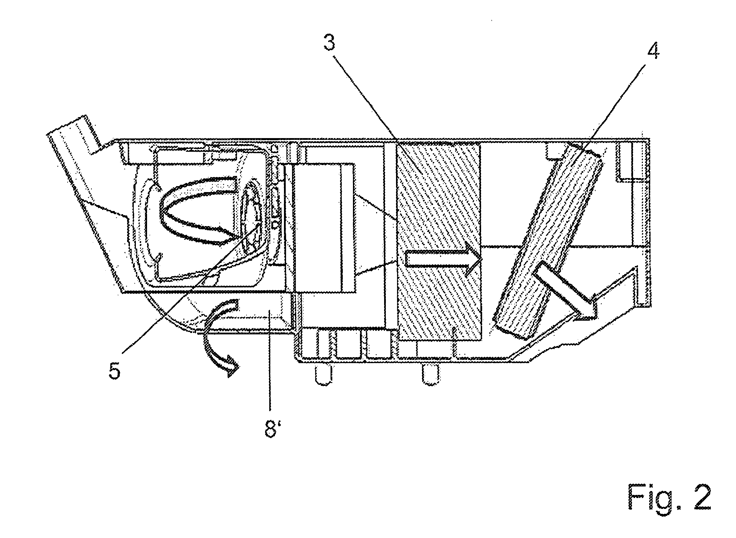

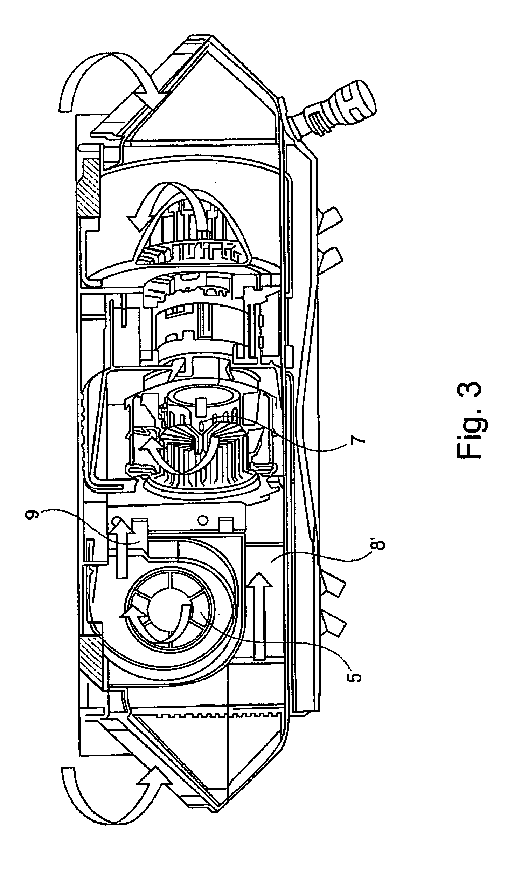

Um direkt von der linken Umluftöffnung 8 zum zweiten Gebläse 7 zu gefangen, ist der Umluft-Ansaugluftkanal 8' vorliegend unter dem ersten Gebläse 5 hindurchgeführt, wie aus Fig. 2 ersichtlich. Der rechte Umluft-Ansaugluftkanal geht direkt zum zweiten Gebläse 7. Die von hinten her über das erste Gebläse 5 angesaugte Frischluft wird vom ersten Gebläse 5 über einen Zwischenluftkanal 9 (siehe Fig. 3), welcher oberhalb des linken Umluft-Ansaugluftkanals angeordnet ist, zum zweiten Gebläse 7 geführt. Der Gebläsemotor des ersten Gebläses 5 ist in Fahrtrichtung vorn, d.h. In direkter Nachbarschaft zum Verdampfer 3 angeordnet. Der Gebläsemotor des zweiten Gebläses 7 ist zwischen den beiden Laufrädern ebenfalls in der Nähe des Verdampfers 3 angeordnet. Der Heizer 4 ist auf der den Gebläsen 5 und 7 abgewandten Seite des Verdampfers 3 angeordnet, so dass die Gebläsemotoren vor Wärmeauswirkungen seitens des Heizers 4 geschützt sind und teilweise noch durch den Verdampfer 3 in direkter Nachbarschaft gekühlt werden.

Gemäß einer ersten Variante des Ausführungsbeispiels, die nicht in der Zeichnung dargestellt ist, ist der linke Umluft-Ansaugluftkanal oberhalb des ersten Gebläses verlaufend angeordnet, so dass auch die Zuführungen zum zweiten Gebläse vertauscht zum zuvor beschriebenen Ausführungsbeispiel angeordnet sind.

Gemäß einer zweiten Variante des Ausführungsbeispiels ist der erste Gebläsemotor derart leistungsstark, dass die angesaugte Frischluft direkt dem Verdampfer zugeführt wird. d.h. das zweite Gebläse ist in diesem Fall kein Hauptgebläse sondern ein reines Umluftgebläse. Auch in diesem Fall kann der linke Umluft-Ansaugluftkanal unter oder oberhalb des ersten Gebläses verlaufend angeordnet sein, jedoch entfällt der Zwischenluftkanal, welcher durch einen Luftkanal direkt zum Verdampfer ersetzt wird.

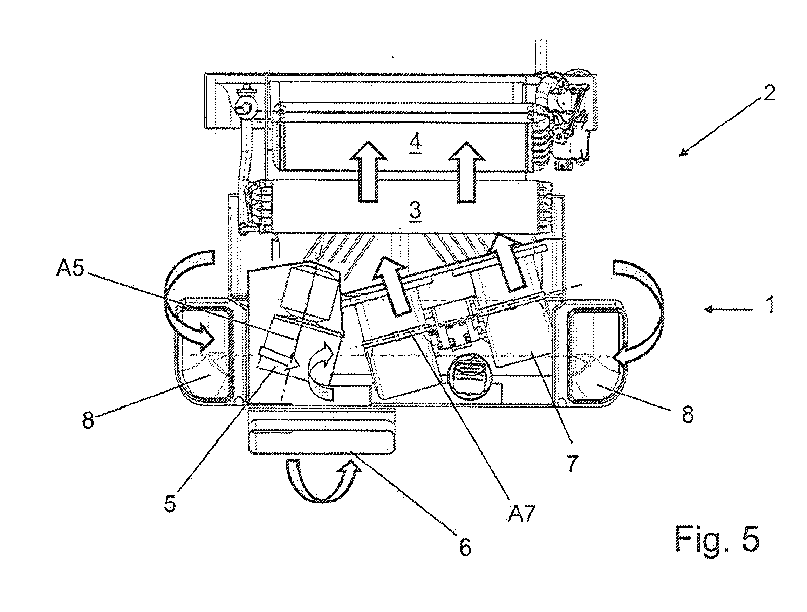

Gemäß dem in Fig. 5 schematisch dargestellten, zweiten Ausführungsbeispiel ist eine gegenüber dem ersten Ausführungsbeispiel etwas abgewandelte Gebläseanordnung 1 für eine Klimaanlage 2 eines Baufahrzeugs vorgesehen, wobei für gleiche oder gleichwirkende Elemente die gleichen Bezugszeichen wie beim ersten Ausführungsbeispiel verendet werden. Ferner wird in Bezug auf die Ausgestaltung - sofern nachfolgend nicht ausdrücken erwähnt - auf die Beschreibung des ersten Ausfuhrungsbeispsels verwiesen.

Wesentlicher Unterschied zum ersten Ausführungsbeispiel ist, dass die Ausrichtung der Drehachse A5 des ersten Gebläses 5 in anderer Richtung geneigt ist. Diese Drehachsen A5 ist nunmehr in Fahrzeuglängsrichung (entspricht der Vertikalen in Fig. 5) um 15° nach rechts, also zur Mitte hin, und nicht, wie beim ersten Ausführungsbeispiel vorgesehen, um 15° nach links, also nach außen hin, gedreht, Die Anordnung des zweiten Gebläses 7 bleibt dagegen unverändert.

Durch die gedrehte Anordnung des ersten Gebläses 5 kann die von demselben über die Frischluftöffnung 6 angesaugte Frischluft besser auf die beiden Ansaugöffnungen des zweiten Gebläses 7 verteilt werden, d.h. es gelangt mehr Frischluft zum außenseitig angeordneten Gebläselaufrad des zweiten Gebläses 7, wodurch eine verbessere Frischluftverteilung ermöglicht wird.

Auf Grund der gedrehten Anordnung der ersten Drehachse A5 schießen die Gobläsedrehachsen A5 und A7 im Unterschied zum ersten Ausführungsbeispiel keinen rechten Winkel ein, sondern sind in einem kleineren Winkel, vorliegend in einem Winkel von 60°, zueinander angeordnet.

Obwohl vorstehend die Drehachse A5 des ersten Gebläses 5 in einem Winkel von 15° nach innen geneigt ist, kann dieser Winkel auch deutlich größer sein, um der weiter beabstandeten Ansaugöffnung des zweiten Gebläses 7 mehr Frischluft zuführen zu können, so dass die Frischluft gleichmäßiger verteilt werden kann. Der Winkel kann beispielsweise auch 50° und gegebenenfalls mehr betragen.

### Bezugszeichenliste

- 1: Gebläseanordnung
- 2: Klimaanlage
- 3: Verdampfer
- 4: Heizer
- 5: erstes Gebläse (Frischluftansaugung)
- 6: Frischluftöffnung
- 7: zweites Gebläse, Hauptgebläse
- 8: Umluflöffnung
- 8': Umiuft-Ansaugluftkannal
- 9: Zwischenluftkanal
- A5: Drehachse (erstes Gebläse)
- A7: Drehachse (zweites Gebläse)

## Patentansprüche

1. Land- oder Baumaschine mit einer Klimaanlage, aufweisend mindestens zwei Gebläse (5, 7), mindestens einen Frischluft-Ansaugluftkanal, mindestens einen Umluft-Ansaugluftkanal,
**gekennzeichnet durch**,
- einen Verdampfer (3) und einen Heizer (4), die luftabströmseitig der Gebläse (5, 7) angeordnet sind, wobei der Heizer (4) auf der den Gebläsen (5,7) abgewandten Seite des Verdampfers (3) angeordnet ist,
- das erste Gebläse (5) saugt Frischluft von zumindest einer Frischluftöffnung (6) im hinteren Bereich des Fahrzeugs an, und das zweite Gebläse (7) saugt zumindest Umluft aus dem Fahrzeuginnenraum von mindestens zwei auf einander gegenüberliegenden Seiten des Fahrzeugs angeordneten Umluftöffnungen (8) an, und mindestens ein Umluft-Ansaugluftkanal (8') führt ober- und/oder unterhalb des ersten Gebläses (5) verlaufend von der Umluftöffnung (8) auf einer Seite des Fahrzeuginnenraums zum zweiten Gebläse (7).

2. Land- oder Baumaschine nach Anspruch 1, **dadurch gekennzeichnet, dass** ein Zwischenluftkanal (9) zwischen dem ersten Gebläse (5) und dem zweiten Gebläse (7) vorgesehen ist, und das zweite Gebläse (7) als Hauptgebläse Frisch- und Umluft fördert.

3. Land- oder Baumaschine nach Anspruch 1, **dadurch gekennzeichnet, dass** das erste Gebläse ausschließlich Frischluft und das zweite Gebläse ausschließlich Umluft direkt dem Verdampfer zuführen.

4. Land- oder Baumaschine nach einem der vorhergehenden Ansprüche, **dadurch gekennzeichnet, dass** ein Umluft-Ansaugluftkanal (8') direkt benachbart ober- oder unterhalb des ersten Gebläses (5) verlaufend von einer Seite des Fahrzeuginnenraums zum zweiten Gebläse (7) führt, welches zumindest größtenteils auf der gegenüberliegenden Seite des Fahrzeugs angeordnet ist.

5. Land- oder Baumaschine nach einem der vorhergehenden Ansprüche, **dadurch gekennzeichnet, dass** die Drehachsen der Gebläsemotoren in einem Winkel von 75° bis 105°, insbesondere 85° bis 95°, und besonders bevorzugt in einem rechten Winkel zueinander angeordnet sind.

6. Land- oder Baumaschine nach einem der vorhergehenden Ansprüche, **dadurch gekennzeichnet, dass** die Drehachse des Gebläsemotors des ersten Gebläses (5) in einem Winkel von maximal 25°, insbesondere maximal 10°, zur Fahrzeuglängsrichtung geneigt angeordnet ist.

7. Land- oder Baumaschine nach einem der vorhergehenden Ansprüche, **dadurch gekennzeichnet, dass** die Drehachse des Gebläsemotors des zweiten Gebläses (7) in einem Winkel von maximal 25°, insbesondere maximal 10°, zur Fahrzeugbreitenrichtung geneigt angeordnet ist.

8. Land- oder Baumaschine nach einem der vorhergehenden Ansprüche, **dadurch gekennzeichnet, dass** das zweite Gebläse (7) zwei Laufräder mit dazwischen angeordnetem Gebläsemotor aufweist.

9. Land- oder Baumaschine nach einem der vorhergehenden Ansprüche, **dadurch gekennzeichnet, dass** das erste Gebläse (5) vollständig auf einer Seite des Fahrzeugs angeordnet ist, während das zweite Gebläse (7) größtenteils auf der anderen Seite des Fahrzeugs angeordnet ist.

10. Luftführungsgehäuse für eine Klimaanlage einer Land- oder Baumaschine gemäß einem der Ansprüche 1 bis 9, aufweisend Aufnahmen für zwei Gebläse (5, 7), einen Frischluft-Ansaugluftkanal, mindestens einen Umluft-Ansaugluftkanal, eine Aufnahme für einen Verdampfer (3) und eine Aufnahme für einen Heizer (4), wobei Verdampferaufnahme und Heizeraufnahme luftabströmseitig der Gebläseaufnahmen angeordnet sind, wobei die erste Gebläseaufnahme mit einer Frischluftöffnung (6)verbunden ist, und die zweite Gebläseaufnahme zumindest mit zwei Umluftöffnungen verbunden ist, und mindestens ein Umluft-Ansaugluftkanal (8') ober- und/oder unterhalb der ersten Gebläseaufnahme verlaufend von der Umluftöffnung (8) zur zweiten Gebläseaufnahme führt.

## Claims

1. An agricultural or construction machine having an air-conditioner, comprising at least two blowers (5, 7), at least one fresh air intake air duct, at least one circulating air intake air duct, **characterized by**
- an evaporator (3) and a heater (4), which are arranged on the air outflow side of the blowers (5, 7), wherein the heater (4) is arranged on the side of the evaporator (3) facing away from the blowers (5, 7),
- the first blower (5) sucks in fresh air from at least one fresh air opening (6) in the rear region of the vehicle, and the second blower (7) sucks in at least circulating air from the vehicle interior from at least two circulating air openings (8) arranged on sides of the vehicle which are located opposite each other, and at least one circulating air intake air duct (8') running above and/or below the first blower (5) leads from the circulating air opening (8) on one side of the vehicle interior to the second blower (7).

2. The agricultural or construction machine according to Claim 1, **characterized in that** an intermediate air duct (9) is provided between the first blower (5) and the second blower (7), and the second blower (7) as main blower delivers fresh air and circulating air.

3. The agricultural or construction machine according to Claim 1, **characterized in that** the first blower exclusively feeds fresh air and the second blower exclusively feeds circulating air directly to the evaporator.

4. The agricultural or construction machine according to any one of the preceding claims, **characterized in that** a circulating air intake air duct (8'), running directly adjacent above or below the first blower (5) leads from a side of the vehicle interior to the second blower (7), which at least for the greatest part is arranged on the side of the vehicle located opposite.

5. The agricultural or construction machine according to any one of the preceding claims, **characterized in that** the rotary axes of the blower motors are arranged at an angle of 75° to 105°, in particular 85° to 95°, and most preferably at a right angle to each other.

6. The agricultural or construction machine according to any one of the preceding claims, **characterized in that** the rotary axis of the blower motor of the first blower (5) is arranged sloping to the vehicle longitudinal direction at an angle of a maximum of 25°, in particular a maximum of 10°.

7. The agricultural or construction machine according to any one of the preceding claims, **characterized in that** the rotary axis of the blower motor of the second blower (7) is arranged sloping to the vehicle longitudinal direction at an angle of a maximum of 25°, in particular a maximum of 10°.

8. The agricultural or construction machine according to any one of the preceding claims, **characterized in that** the second blower (7) comprises two impellers with blower motor arranged in between.

9. The agricultural or construction machine according to any one of the preceding claims, **characterized in that** the first blower (5) is completely arranged on a side of the vehicle, while the second blower (7) for the greatest part is arranged on the other side of the vehicle.

10. An air control housing for an air-conditioner of an agricultural or construction machine according to any one of the Claims 1 to 9, comprising mountings for two blowers (5, 7), a fresh air intake air duct, at least one circulating air intake air duct, a mounting for an evaporator (3) and a mounting for a heater (4), wherein evaporator mounting and heater mounting are arranged on the air outflow side of the blower mountings, wherein the first blower mounting is connected to a fresh air opening (6), and the second blower mounting is at least connected to two circulating air openings, and at least one circulating air intake air duct (8') running above and/or below the first blower mounting leads from the circulating air opening (8) to the second blower mounting.

## Revendications

1. Machine agricole ou machine de chantier dotée d'une installation de canalisation, présentant au moins deux soufflantes (5, 7), au moins un canal d'air d'aspiration d'air frais, au moins un canal d'air d'aspiration d'air en circulation,
**caractérisé par**
- un évaporateur (3) et un dispositif de chauffage (4), qui sont disposés côté évacuation d'air des soufflantes (5, 7), le dispositif de chauffage (4) étant disposé sur le côté, opposé aux soufflantes (5, 7) de l'évaporateur (3),
- la première soufflante (5) aspire de l'air frais provenant d'au moins une ouverture d'air frais (6) dans la zone arrière du véhicule, et la seconde soufflante (7) aspire au moins de l'air en circulation hors de l'habitacle du véhicule par au moins deux ouvertures de circulation d'air (8), disposées sur des côtés se faisant face, du véhicule, et au moins un canal d'air d'aspiration d'air de circulation (8') s'étend au-dessus et/ou au-dessous de la première soufflante (5) depuis l'ouverture d'air en circulation (8) sur un côté de l'habitacle du véhicule à la seconde soufflante (7).

2. Machine agricole ou machine de chantier selon la revendication 1, **caractérisé en ce qu'**un canal d'air intermédiaire (9) est prévu entre la première soufflante (5) et la seconde soufflante (7), et la seconde soufflante (7) en tant que soufflante principale transporte de l'air frais et de l'air en circulation.

3. Machine agricole ou machine de chantier selon la revendication 1, **caractérisée en ce que** la première soufflante amène exclusivement de l'air frais et la seconde soufflante uniquement de l'air en circulation directement à l'évaporateur.

4. Machine agricole ou machine de chantier selon l'une des revendications précédentes, **caractérisé en ce qu'**un canal d'air d'aspiration d'air en circulation (8') guide directement à proximité au-dessus ou au-dessous de la première soufflante (5) en partant d'un côté de l'habitacle du véhicule vers la seconde soufflante (7), laquelle est disposée au moins en majeure partie sur le côté opposé du véhicule.

5. Machine agricole ou machine de chantier selon l'une des revendications précédentes, **caractérisé en ce que** les axes de rotation des moteurs de soufflante sont disposés dans un angle de 75° à 105°, en particulier 85° à 95°, et avec une préférence particulière dans un angle droit les uns par rapport aux autres.

6. Machine agricole ou machine de chantier selon l'une des revendications précédentes, **caractérisé en ce que** l'axe de rotation du moteur de soufflante de la première soufflante (5) est disposé de façon inclinée dans un angle de 25° au maximum, en particulier 10° au maximum, par rapport à l'axe longitudinal du véhicule.

7. Machine agricole ou machine de chantier selon l'une des revendications précédentes, **caractérisée en ce que** l'axe de rotation du moteur de soufflante de la seconde soufflante (7) est disposé de façon inclinée dans un angle maximum de 25°, en particulier maximum de 10°, par rapport au sens de la largeur du véhicule.

8. Machine agricole ou machine de chantier selon l'une des revendications précédentes, **caractérisée en ce que** la seconde soufflante (7) présente deux roues mobiles avec moteur de soufflante disposé entre les deux.

9. Machine agricole ou machine de chantier selon l'une des revendications précédentes, **caractérisée en ce que** la première soufflante (5) est disposée complètement sur un côté du véhicule, alors que la seconde soufflante (7) est disposée en majeure partie sur l'autre côté du véhicule.

10. Boîtier de guidage d'air pour une installation de climatisation d'une machine agricole ou machine de chantier selon l'une des revendications 1 à 9, présentant des logements pour deux boîtiers (5, 7), un canal d'air d'aspiration d'air frais, au moins un canal d'air d'aspiration d'air en circulation, un logement pour un évaporateur (3) et un logement pour un dispositif de chauffage (4), le logement d'évaporateur et le logement du dispositif de chauffage étant disposés côté évacuation d'air des logements de soufflante, le premier logement de soufflante étant relié à une ouverture d'air frais (6), et le second logement de boîtier étant relié au moins à deux ouvertures d'air de circulation, et au moins un canal d'air d'aspiration d'air en circulation (8'), agencé au-dessus et/ou au-dessous du premier logement de soufflante, allant de l'ouverture d'air en circulation (8) vers le second logement de soufflante.
